Europäisches Patentamt

European Patent Office

Office européen des brevets

(11) Publication number: **0 129 399**
**B1**

# EUROPEAN PATENT SPECIFICATION

(45) Date of publication of patent specification: **16.09.87**

(21) Application number: **84303984.3**

(22) Date of filing: **13.06.84**

(51) Int. Cl.⁴: **H 01 M 4/92, H 01 M 4/96,**
**H 01 M 8/08, B 01 J 23/89**

(54) Platinum-iron electrocatalyst and fuel cell electrode using the same.

(30) Priority: **14.06.83 US 504341**

(43) Date of publication of application:
**27.12.84 Bulletin 84/52**

(45) Publication of the grant of the patent:
**16.09.87 Bulletin 87/38**

(84) Designated Contracting States:
**AT BE CH DE FR GB IT LI LU NL SE**

(56) References cited:
**GB-A-2 024 643**
**US-A-4 202 934**
**US-A-4 264 685**

(73) Proprietor: **ENGELHARD CORPORATION**
**70 Wood Avenue South CN 770**
**Iselin New Jersey 08830 (US)**

(72) Inventor: **Wan, Chung-Zong**
**10 Layne Road**
**Somerset New Jersey (US)**

(74) Representative: **Colgan, Stephen James et al**
**CARPMAELS & RANSFORD**
**43 Bloomsbury Square**
**London WC1A 2RA. (GB)**

Courier Press, Leamington Spa, England.

## 0 129 399

**Description**

The present invention relates to platinum group metal alloy electrocatalysts and to fuel cell electrodes utilizing such electrocatalysts. More specifically, the present invention concerns platinum-iron alloy electrocatalysts and acid electrolyte fuel cell cathodes utilizing the same.

Generally speaking, a fuel cell is an electrochemical device for obtaining direct conversion of a fuel, such as hydrogen or a hydrocarbon, and an oxidant, such as oxygen, to a low voltage DC current. Typically, such cells comprise fuel electrodes (anodes), oxidant electrodes (cathodes), an electrolyte between the electrodes, and means for separately introducing fuel and oxidant streams to, respectively, the anodes and cathodes.

In operation, the fuel is oxidized at the anode in contact with an electrocatalyst and in the presence of the electrolyte, and results in liberation of electrons. Oxygen or an oxygen-containing gas such as air is fed to the cathode, where it is reduced at the electrocatalytic surface in the presence of the electrolyte, with corresponding consumption of electrons which have been transferred from the anode via an external circuit. The electron flow from the anode to the cathode constitutes a direct current electrical potential which can be usefully applied as such to perform tasks, or converted to alternating current.

Generally speaking, the "platinum group metals" of Group VIII of the Periodic Table, i.e., platinum, palladium, rhodium, ruthenium, iridium, and osmium, or combinations of two or more thereof, have found use as oxygen reduction catalysts and may also be useful as fuel (hydrocarbon or hydrogen) oxidation catalysts. Alloys of such platinum group metals, such as alloys with metals of Group IB of the Periodic Table or other metals, are known for such use. The metal catalyst is usually a supported metal catalyst, that is, the metal is supported on a carrier material such as conductive carbon black powder.

A variety of materials for the support member on which the catalyst is deposited to form the cell electrodes have been utilized with varying degrees of success. Support members made of metal, such as nickel, for instance, can be used to make a metal electrode by securing the catalyst particles onto the support member. Such metal electrodes are permeable to gaseous fuel, such as hydrogen, and are relatively easy to fabricate. They are, however, susceptible to corrosive attack by strong acid electrolytes, such as phosphoric acid, causing shortened life, substantial maintenance expense and attendant variations in electrical output. Carbon electrodes having platinum group metal catalysts applied thereon have been used with some success.

When platinum group metal-containing carbon-supported catalyst compositions are employed as the electrocatalyst of the cathodes of a phosphoric acid fuel cell system, (See *J. Electrochem. Soc. 127* 1219, 1980), the surface area of the metal catalyst tends to progressively decrease. This shortens the efficient operating life span of the electrode and necessitates the added expense and inconvenience of built-in over-capacity to accommodate the anticipated decline. The surface area reduction problem is sometimes referred to as "sintering", and is believed to be caused by the migration of small platinum group metal (*e.g.*, platinum) crystallites across the cathode surface, which causes the crystallites to form larger crystallite masses. The resulting loss of active metal surface area has been correlated to progressive loss in cell output and overall efficiency.

Previous attempts at improving electrode catalysts for use in fuel cells in general have included the preparation of an alloy of a platinum group metal with various base metals such as vanadium, tungsten, aluminum, titanium, silicon, cerium, strontium, or the like. See U.S. Patents 4,202,934 and 4,186,110. Other attempts have included the deposition of a plurality of metal salts on a support and reduction of the salts to the metals; see U.S. Patent 3,340,097.

Platinum-iron alloys have been prepared in the past: J. Crangle et al, "The Range of Stability of the Superlattice $Pt_3Fe$", *The Philosophical Magazine,* Volume 7, pp. 207—212, (1962). Also, platinum-iron alloys have been dispersed on carbon for use as catalysts for the decomposition of ammonia — a reaction catalyzed by iron but not by platinum — and for the isomerization of neopentane — a reaction catalyzed by platinum but not by iron, e.g. C. Bartholomew et al, "Preparation of a Well Dispersed Platinum-Iron Alloy on Carbon", *Journal of Catalysis,* Vol. 25, pp. 173—181 (1972). However, the $Pt_3Fe$ superlattice structure was not found. In addition, U.S. 3,759,823 discloses the use of platinum-iron alloys supported on alumina as hydrocarbon conversion catalysts, i.e. dehydrocyclization of n-hexane.

In accordance with one major aspect of the present invention, there is provided a platinum electrocatalyst comprising a platinum-iron alloy of 17 to 42, preferably about 20 to 35, atomic percent iron, having a $Pt_3Fe$ superlattice structure, and dispersed on a suitable carrier.

The term "electrocatalyst" as used herein and in the claims means a catalyst for catalyzing oxidation and reduction electrode reactions, specifically oxygen reduction (at a cathode) and hydrogen (or other fuel) oxidation (at an anode). The electrocatalyst of the invention has particular utility for the catalytic reduction of oxygen. The terms catalyst and electrocatalyst are used interchangeably herein.

Preferred aspects of the invention provide that the carrier may comprise carbon, and that the platinum-iron alloy may have a surface area of at least about 30 $m^2/g$, preferably at least about 60 $m^2/g$, and may comprise about 0.1 to 30% by weight of the total weight of the alloy plus carrier.

In accordance with one major aspect of the invention, there is provided an electrode, e.g., a cathode, for an acid electrolyte fuel cell, the electrode comprising a platinum alloy catalyst supported on an acid-resistant support member, the catalyst comprising a catalytically effective amount of platinum-iron alloy of

2

17 to 42 atomic percent iron, having a $Pt_3Fe$ superlattice structure, and dispersed on a suitable carrier.

The catalyst employed as the electrocatalyst of the electrode of the invention may have any one or more of the other catalyst features described above. An acid resistant and wet proofing binder material may be used to bind the catalyst on the support member to comprise the electrode of the invention, which has particular utility as the cathode of an acid electrolyte fuel cell, more particularly a phosphoric acid electrolyte fuel cell.

The catalyst of the present invention is a supported electrocatalyst in which fine crystallites of the platinum-iron alloy are dispersed on a carrier which may be conductive carbon black, tungsten carbide, or any other carrier material suitable for the purpose.

A convenient method of manufacturing the catalyst is as follows. A powdered carrier material has platinum dispersed thereon. Such material is conventionally prepared by an impregnating or adsorbing technique in which powder or fine particulate material, such as conductive carbon powder, is contacted with an aqueous solution or suspension of one or more platinum compounds, and then is heated at a temperature sufficiently high under a reducing atmosphere to reduce the metal compound(s) to the elemental metal. The production of platinum on carbon carrier catalysts by such techniques is well known in the art.

Generally, the impregnation technique is one in which only sufficient liquid to wet the particles is used. The adsorption technique employs an excess of the liquid solution or suspension relative to the amount of material being treated.

The platinum may be adsorbed onto the carbon powder or other carrier material from an aqueous solution of an acid or salt such as chloroplatinic acid, a chloroplatinate, solubilized $H_2Pt(OH)_6$, or the like. Platinum adsorption is preferably carried out by use of solubilized $H_2Pt(OH)_6$, and this may be used in combination with other platinum compounds. The carrier material is usually prewashed in mild acid and slurried in acidified deionized water containing a soluble compound of the catalytic metal or metals which are to be deposited thereon. A typical preparation is illustrated in Example I below.

The catalyst of the invention may be prepared by using as a starting material a conventional supported platinum catalyst made as briefly described above, although any other suitable techniques, such as simultaneous impregnation of a suitable carrier with platinum and iron compounds, could be employed. When employing a conventional supported platinum catalyst as the starting material, the platinum catalyst may be contacted with a solution of a suitable iron compound to deposit the latter thereon with the ratio of platinum to iron being near the desired final composition, then heated under reducing conditions at a temperature sufficiently high to form the $Pt_3Fe$ superlattice structure, and for a period of time sufficiently long as to form the superlattice structure.

Iron compounds, which are soluble in water and suitable for use in accordance with the present invention to be deposited onto a carbon or other carrier material, are ferric chloride, -nitrate, and -sulfate as well as similar ferrous compounds. All these iron salts are sufficiently water soluble to be used to prepare aqueous iron contacting solutions. The chloride and nitrate are preferred inasmuch as they are currently less expensive than the other iron salts.

A fuel cell electrode, for example a cathode, in accordance with the present invention, and one which is well suited for use in acid electrolyte fuel cells, particularly as the cathode in phosphoric acid electrolyte fuel cells, comprises

(a) a support member such as wet-proofed graphite paper, metal, or the like;

(b) a corrosion-resistant (in an oxygen and phosphoric acid environment), particulate or powder carrier material, such as conductive carbon black or tungsten carbide or the like;

(c) a supported platinum-iron alloy catalyst dispersed on the carrier in the form of fine crystallites, and

(d) a "wet-proof" binder to secure the supported catalyst particles to the support member.

The electrode of the invention may be made by first preparing the platinum-iron supported catalyst. The supported catalyst particles are then combined with a binder such as a polytetrafluoroethylene suspension (for example, sold under the DuPont trademark TEFLON) or other polymeric material, to provide a "wet-proof" and acid resistant binder for the supported catalyst particles, that is, a binder which will endure the acid and other conditions of an operating fuel cell. The binder and supported catalyst mixture is then deposited onto a suitable support member such as a graphite paper which has been wet-proofed with polytetrafluoroethylene, and sintered in oxygen (air).

The platinum-iron metal alloy will usually comprise from about 0.1 to 30%, preferably, about 4 to 20% and most preferably about 5 to 15%, all by weight, of the total weight of the carrier plus alloy. The platinum-iron catalyst metal alloy should be present on the support member in a catalytically effective amount, which generally will be in the range of about 0.1 to 2 mg of the $Pt_3Fe$ alloy per $cmn^2$ of area of the support member, preferably about 0.2 to 1 mg/cm.305, and most preferably about 0.3 to 0.7 mg/cm$^2$.

Carrier materials suitable for use in the present invention are generally conductive carbon blacks such as materials sold under the trademarks VULCAN XC72R, XC72, or materials sold under the trademark COLUMBIAN CONDUCTEX, or the like. These carrier materials will generally have a surface area in the range of about 60—300 m$^2$/g and a particle size of about 0.5—50 microns.

Deposition of the catalyst-coated carrier onto the support member is conveniently effected by suspending the carrier in a liquid such as water and directly depositing the wetted particles onto the support by filtration techniques, or alternatively, by applying it as a dry powder to a porous support and then wetting the surface by drawing water or electrolyte through the support.

The following examples illustrate the preparation and testing of illustrative embodiments of the invention.

## Example I
### (Preparation of Supported Pt Catalyst)

Eighty-one (81) grams of heat-treated conductive carbon black (Cabot Vulcan XC72R) having a surface area of 120 $m^2$/g was slurried in 1,500 g of deionized water containing 4.0 g of glacial acetic acid. 9.0 g of Pt as $H_2Pt(OH)_6$ was dissolved at room temperature with an amine in a total of 600 grams of aqueous solution. The platinum solution was then added to the slurry with constant stirring. The slurry temperature was gradually raised to about 95°C with the gradual addition of 50 g of 5% formic acid as a reducing agent. The slurry was kept at 95°C for thirty minutes and then cooled to room temperature, filtered and washed with deionized water. The filter cake was then dried at 95°C for sixteen (16) hours in flowing nitrogen to provide a platinum on carbon supported catalyst of 10 wt % Pt and having an overall surface area of 100 $m^2$/g Pt.

## Example II
### (Preparation of Supported Pt-Fe Alloy Catalyst)

A platinum-iron alloy catalyst supported on carbon was prepared in the following manner. Twenty (20) g of the supported platinum catalyst of Example I was dispersed in 400 ml of distilled water. The mixture was blended at high speed for twenty (20) minutes. Sixty (60) g of an aqueous solution containing 0.29 g iron as ferric nitrate was added to the slurry with constant stirring. After addition of the entire 60 g of solution, dilute hydrazine aqueous solution was added to the slurry until a pH of 7.0 was attained. Under these conditions, the iron species completely adsorbs on the supported platinum catalyst. Continuous stirring for thirty (30) minutes was carried out. The slurry was then filtered and the solids were dried at 95°C in nitrogen and then heat treated at 900°C in a flowing gas stream comprising 7 volume % $H_2$ (balance $N_2$) for one hour to form the platinum-iron alloy catalyst. The formation of the Pt-Fe alloy was confirmed by x-ray diffraction. The surface area was found to be about 93 ± $m^2$/g by cyclic voltametry, and the iron content in the alloy was found to be about 26 atomic % by x-ray diffraction. The presence of the superlattice structure was also confirmed by x-ray diffraction.

## Example III
### (Comparative Example)

The Pt-Fe alloy catalyst preparation in accordance with Example II was repeated except that the ferric nitrate content was reduced to 0.116 g iron. As a result, virtually all of the iron was found to be alloyed with the platinum at a heat treatment temperature of about 600°C. The iron content was only 10 atomic percent and no $Pt_3Fe$ superlattice structure was detected.

## Example IV
### (Electrode Fabrication and Testing)

(A) Carbon supported platinum catalyst material of Example I (control) is ultrasonically dispersed in an aqueous polytetrafluoroethylene suspension (TEFLON[R]TFE—30). The catalyst/polytetrafluoroethylene suspension is then precipitated out by addition of $AlCl_3$. The floc, having a composition of approximately 5% platinum, 45% carbon and 50% polytetrafluoroethylene by weight, excluding water, is filtered onto a polytetrafluoroethylene wet-proofed graphite paper substrate to obtain a platinum loading of 0.46 mg/$cm^2$. The filter cake and paper are then dried, rolled and sintered in air at 360°C for 15 minutes. The resulting cathode is identified as E—1.

(B) Step A is repeated except that the supported platinum-iron alloy of Example II is utilized in place of the material of Example I. The resulting cathode is identified as E—2.

(C) Cathodes E—1 and E—2 are evaluated in identical single cell phosphoric acid test fuel cells at 191°C (150 Ampo/$ft^2$), using $H_2$-air feed, and the results of 200 hours of operation are set out in Table I.

TABLE I

Performance in millivolts, IR-Free

| Cathode Electrocatalyst | 200 Hours |
| --- | --- |
| E—1 (Pt/C) | 674 |
| E—2 (Pt-Fe/C) | 739 |

As can be seen, the Pt-Fe alloy catalyzed cathode E—2 demonstrated superior performance over the control Pt catalyzed cathode E—1.

**0 129 399**

Example V
(Preparation of Supported Pt-Fe Alloy Catalyst)

The technique of Example II was repeated except that ferric chloride was used instead of ferric nitrate. The starting material platinum on carbon catalyst was one displaying a Pt surface area of 120 m$^2$/g. This enabled carrying out the reduction and alloying of the iron with the platinum at a lower temperature of about 750°C to provide a platinum-iron alloy catalyst with the Pt$_3$Fe superlattice structure. When the reduction was carried out at 600°C, no superlattice structure was detected.

Example VI
(Surace Area Retention Test)

A platinum-chromium alloy supported catalyst was prepared by substantially following the procedure of Example II, except that chromium nitrate was substituted for the ferric nitrate of Example II. A sample of the platinum-iron alloy catalyst of Example II and the platinum-chlormium alloy catalyst of this Example VI were utilized to prepare electrodes generally in accordance with the procedure of Example IV.

The resultant cathodes were immersed in an accelerated aging cell containing 500 ml of 105% phosphoric acid (bubbling pure N$_2$), maintained at 204°C, and an electrochemical potential of 0.7 volt relative to a hydrogen reference electrode was applied. The results of 160 hours of aging on the surface area retention of the catalysts are shown in Table II.

TABLE II

| Cathode Electrocatalyst | Alloy Surface Area (m$^2$/g) | |
| --- | --- | --- |
| | Fresh | Aged |
| Pt Control | 95 | 21 |
| Pt-Cr Alloy Control | 93 | 28 |
| Pt-Fe Alloy | 93 | 41 |

It should be noted that the initial surface area of all three electrocatalysts was essentially the same. However, after 160 hours of accelerated aging, the platinum-iron alloy showed remarkably better surface area retention than did the platinum-chromium alloy or the platinum catalyst electrode.

Example VII

A Pt-Fe catalyst was prepared by following the method described in Example II except the iron content introduced was only 0.116 g. The finished alloy catalyst (Fe content about 10 atomic %) was examined by x-ray diffraction. It was found that virtually all the Fe was alloyed with Pt (d=3.90Å, 36Å in size). However, the Pt-Fe alloy was not in the Pt$_3$Fe superlattice structure. Accelerated aging test (204°C, 105% H$_3$PO$_4$) of this alloy indicated that it was not stable. Virtually all the alloy structure was destroyed within 72 hours of the accelerated aging.

Example VIII

A Pt-Fe catalyst was prepared by following the method described in Example II except twice the amount of Fe was introduced, i.e., .58 grams. The supported alloy contained 50 atomic % Fe content as examined by x-ray diffraction. It was found that alpha-Fe$_2$O$_3$ (>200Å) and Fe$_3$C$_2$ (195Å) crystallites appeared on the carbon surface and the Pt-Fe alloy (d=3.886Å, 38Å in size) was not in Pt$_3$Fe superlattice structure. Accelerated aging test (204°C, 105% H$_3$PO$_4$) of this alloy indicated that this Pt-Fe alloy catalyst lost alloy structure within 72 hours. On the contrary, the Pt-Fe alloy in Pt$_3$Fe superlattice prepared in Example II remains in alloy structure after the 72 hours accelerated aging, and in fact even after 160 hours.

While the invention has been described in detail with reference to specific preferred embodiments thereof, it will be apparent that upon a reading and understanding of the foregoing, numerous variations thereto will be readily envisioned by those skilled in the art. Such variations are believed to fall within the scope of the invention and the following claims.

**Claims**

1. A platinum alloy electrocatalyst comprising a platinum-iron alloy in the form of the Pt$_3$Fe superlattice structure and containing 17 to 42 atomic percent iron, and dispersed on a suitable carrier.

2. The electrocatalyst of claim 1 wherein said carrier comprises carbon.

3. The electrocatalyst of claim 2 wherein the carrier comprises a conductive carbon powder.

4. The electrocatalyst of any preceding claim wherein the platinum-iron alloy has a surface area of at least 30 m$^2$/g.

5

5. The electrocatalyst of any preceding claim wherein the platinum-iron alloy comprises about 20 to 35 atomic percent iron, the balance being platinum.

6. The electrocatalyst of any preceding claim wherein the platinum-iron alloy comprises about 0.1 to 30% by weight of the total weight of the alloy plus carrier.

7. An electrode of an acid electrolyte fuel cell comprises a catalytically effective amount of a platinum alloy electrocatalyst according to any preceding claim, supported on an acid-resistant support member.

8. The electrode of claim 7 comprising an oxygen reduction cathode.

9. The cathode of claim 8, further including an acid resistant binder material binding the catalyst on the support member.

10. The cathode of claim 8 or claim 9 wherein the platinum-iron alloy is present in an amount of about 0.1 to 2 mg of Pt-Fe alloy per square centimeter of support member surface.

## Patentansprüche

1. Platinlegierungs-Elektrokatalysator, umfassend eine Platin-Eisen-Legierung in Form der $Pt_3Fe$-Überstruktur und mit einem Gehalt an 17 bis 42 Atom-% Eisen, dispergiert auf einem geeigneten Träger.

2. Elektrokatalysator nach Anspruch 1, worin der Träger Kohlenstoff umfaßt.

3. Elektrokatalysator nach Anspruch 2, worin der Träger ein leitfähiges Kohlenstoffpulver umfaßt.

4. Elektrokatalysator nach einem der vorstehenden Ansprüche, worin die Platin-Eisen-Legierung eine Oberfläche von wenigstens 30 m²/g aufweist.

5. Elektrokatalysator nach einem der vorstehenden Ansprüche, worin die Platin-Eisen-Legierung etwa 20 bis 35 Atom-. Eisen, Rest Platin, umnfaßt.

6. Elektrokatalysator nach einem der vorstehenden Ansprüche, worin die Platin-Eisen-Legierung etwa 0,1 bis 30 Gew.-% des Gesamtgewichts aus Legierung und Träger umfaßt.

7. Elektrode für eine Brennstoffzelle mit saurem Elektrolyten umfassend eine katalytisch wirksame Menge eines Platinlegierungs-Elektrokatalysators gemäß einem der vorstehenden Ansprüche, aufgebracht auf einen säurebeständigen Träger.

8. Elektrode nach Anspruch 7, umfassend eine Sauerstoffreduktions-kathode.

9. Kathode nach Anspruch 8, mit einem zusätzlichen Gehalt an einem den Katalysator an der Träger bindenden säurebeständigen Bindemittel.

10. Kathode nach Anspruch 8 oder 9, worin die Platin-Eisen-Legierung in einer Menge von etwa 0,1 bis 2 mg Pt-Fe-Legierung je Quadratzentimeter Oberfläche des Trägers vorleigt.

## Revendications

1. Un électrocatalyseur d'alliage de platine comprenant un alliage platine/fer ayant la structure du superréseau $Pt_3Fe$ et contenant 17 à 42% atomiques de fer et dispersé sur un support approprié.

2. L'électrocatalyseur de la revendication 1 dans lequel ledit support comprend du carbone.

3. L'électrocatalyseur de la revendication 2 dans lequel le support comprend une poudre de carbone conducteur.

4. L'électrocatalyseur de l'une quelconque des revendications précédentes dans lequel l'alliage platine/fer a une surface spécifique d'au moins 30 m²/g.

5. L'électrocatalyseur de l'une quelconque des revendications précédentes dans lequel l'alliage platine/fer comprend environ 20 à 35% atomiques de fer, le reste étant du platine.

6. L'électrocatalyseur de l'une quelconque des revendications précédentes dans lequel l'alliage platine/fer constitue environ 0,1 à 30% en poids par rapport au poids total de. l'alliage et du support.

7. Une élextrode pour une pile à combustile à élextrolyte acide comprenant une quantité catalytiquement efficace d'un électrocatalyseur d'alliage de platine selon l'une quelconque des revendications précédentes porté sur un élément de soutien résistant aux acides.

8. L'électrode de la revendication 7 constituent une cathode de réduction de l'oxygène.

9. La cathode de la revendication 8 comprenant de plus un matériau liant résistant aux acides liant le catalyseur à l'élément de soutien.

10. La cathode de la revendication 8 ou de la revendication 9 dans laquelle l'alliage de platine/fer est présent en une quantité d'environ 0,1 à 3 mg d'alliage Pt-Fe/cm² de surface de l'élément de soutien.